## Europäisches Patentamt

## European Patent Office

## Office européen des brevets

(11) Veröffentlichungsnummer: **0 000 884**
A1

# (12) EUROPÄISCHE PATENTANMELDUNG

(21) Anmeldenummer: **78100595.4**

(22) Anmeldetag: **04.08.78**

(51) Int. Cl.²: **C 08 G 12/42**, C 08 G 12/38, C 08 L 29/06

(30) Priorität: **19.08.77 DE 2737423**

(43) Veröffentlichungstag der Anmeldung: **07.03.79 Patentblatt 79/5**

(84) Benannte Vertragsstaaten: **BE CH DE FR GB NL**

(71) Anmelder: **CASSELLA Aktiengesellschaft, Hanauer Landstrasse 526, D-6000 Frankfurt am Main 61 (DE)**

(72) Erfinder: **Kaiser, Wolfgang, Kolpingstrasse 30, D-6450 Hanau 8 (DE)**
Erfinder: **Gockert, Alfred, Birkholzweg 19, D-6000 Frankfurt am Main 50 (DE)**
Erfinder: **Michel, Walter, Dr., Fuldaer Strasse 27, D-6000 Frankfurt am Main (DE)**

(74) Vertreter: **Urbach, Hans-Georg, Dr. et al, Hanauer Landstrasse 526, D-6000 Frankfurt am Main 61 (DE)**

(54) **Aminoplast-Vorkondensat, Verfahren zu seiner Herstellung und seine Verwendung.**

(57) Ein Aminoplast-Vorkondensat, bestehend aus einer wässrigen Lösung von mit Methanol teilverätherten Harnstoff-Formaldehyd- und Melamin-Formaldehyd-Kondensationsprodukten, wobei das Molverhältnis von Harnstoff zu Melaminkondensationsprodukten, bezogen auf Harnstoff bzw. Melamin, 1:0,2 bis 0,65 und der Verätherungsgrad der Methylolgruppen 40 bis 75% beträgt und das teilverätherte Harnstoff-Formaldehyd-Kondensationsprodukt überwiegend als teilveräthertes Dimethyloluron und das teilverätherte Melamin-Formaldehyd-Kondensationsprodukt überwiegend als teilveräthertes Hexamethylolmelamin vorliegt, wird dadurch hergestellt, dass man in wässriger Lösung Harnstoff mit, bezogen auf 1 Mol Harnstoff, 8–12 Mol Formaldehyd bei pH-Werten über 11 und Temperaturen von 45 bis 55°C kondensiert, dann mit 0,2 bis 0,65 Mol Melamin versetzt und bei 65–80°C 10 bis 20 Minuten weiterkondensiert und dann mit 17 bis 23 Mol Methanol bei pH-Werten unter 3 bei 30–40°C veräthert, neutralisiert und anschliessend eindampft. Das Aminoplast-Vorkondensat wird zur Vernetzung OH-Gruppen enthaltender Polymerer verwendet.

0000884

Ref. 3099

Aminoplast-Vorkondensat, Verfahren zu seiner Herstellung
und seine Verwendung

Es ist bekannt, Aminoplast-Vorkondensate durch Kondensation
von Aminoplastbildner, wie Harnstoff, Thioharnstoff, Cyanguanidin, Melamin, Benzoguanamin oder Acetoguanamin, mit
Formaldehyd, gegebenenfalls in Gegenwart von niederen Alkanolen im alkalischen Medium, herzustellen. Es ist auch bereits bekannt, diese Herstellung der Aminoplast-Vorkondensate in der Weise zu modifizieren, daß man zunächst den Aminoplastbildner mit dem Formaldehyd im alkalischen Medium kondensiert und anschließend im schwach sauren Medium die in
dem Vorkondensat enthaltenen Methylolgruppen ganz oder teilweise mit Alkanolen veräthert.

Aminoplast-Vorkondensate werden für zahlreiche technische
Zwecke eingesetzt. So dienen sie beispielsweise bei der Herstellung von Schichtpreßstoffen, bei der Oberflächenveredlung von Holzwerkstoffen, als Hochveredlungsmittel für Zellulose-Textilmaterialien, zur Papierveredlung und als
Vernetzer für OH-Gruppen-haltige Polymerisate. Durch die
Wahl der Ausgangskomponenten und ihrer Umsetzungsverhältnisse sowie durch die Anwendung spezieller Reaktionsbedingungen und den zusätzlichen Einsatz von Modifizierungsmitteln können Aminoplast-Vorkondensate hergestellt werden,

BAD ORIGINAL

0000884
Ref. 3099

die sehr weitgehend an den geplanten Einsatzzweck angepaßt sind. Aminoplast-Vorkondensate, die zur Vernetzung OH-Gruppen-haltiger Polymerer geeignet sind, können eingesetzt werden in Pflegeleicht- bzw. Steif-Ausrüstungen für Textilien. Hierbei werden an das Aminoplast-Vorkondensat eine Reihe von Bedingungen gestellt, die nur sehr schwer gleichzeitig zu erfüllen sind. So dürfen die Mittel zur Steif-Ausrüstung nicht zur Vergilbung neigen, sie sollen eine hohe Waschpermanenz und eine geringe Chlor-Retention haben, sie sollen wenig freien Formaldehyd enthalten, da dieser bei der Anwendung sehr stört, und sie müssen frei sein von Amingeruch. Sie sollen unter Applikationsbedingungen schnell und vollständig auskondensieren, d.h. vernetzen, gleichzeitig aber eine gute Lagerfähigkeit bei Normaltemperaturen haben.

Die bisher für die Vernetzung OH-Gruppen-haltiger Polymerer bekannten Aminoplast-Vorkondensate haben in dieser Eigenschaft die obenstehende Kombination anwendungstechnischer Anforderungen nicht erfüllt.

Es wurde nun gefunden, daß Aminoplast-Vorkondensate, bestehend aus einer wäßrigen Lösung von mit Methanol teilverätherten Harnstoff-Formaldehyd- und Melamin-Formaldehyd-Kondensationsprodukten, in denen das Molverhältnis von Harnstoff- zu Melamin-Kondensationsprodukten, bezogen auf Harnstoff bzw. Melamin, 1:0,2 bis 0,65, vorzugsweise 1:0,3 bis 0,6 beträgt, der Verätherungsgrad der Methylolgruppen 40 bis 70 %, vorzugsweise 50 bis 65 %, ist und in denen das teilverätherte Harnstoff-Formaldehyd-Kondensationsprodukt überwiegend als teilveräthertes Dimethyloluron und das teilverätherte Melamin-Formaldehyd-Kondensationsprodukt überwiegend als teilveräthertes Hexamethylolmelamin vorliegt, gegenüber nächstvergleichbaren bekannten Aminoplast-Vorkondensaten im Hinblick auf die obengenannten technisch wünschenswerten Eigenschaften wesentliche Vorteile aufweisen.

Die chemische Zusammensetzung und die anwendungstechnischen Eigenschaften der erfindungsgemäßen Aminoplast-Vorkondensate sind im wesentlichen bestimmt durch den Gehalt an teilveräthertem Dimethyloluron von mindestens 60 Mol%, vorzugsweise mindestens 80 Mol%, und teilveräthertem Hexamethylolmelamin von mindestens 75 Mol%, vorzugsweise mindestens 80 Mol%, bezogen auf die zugrundeliegenden Aminoplastbildner Harnstoff und Melamin, sowie durch einen Gehalt von 0,2 bis 0,4 Mol teilveräthertem methyloliertem Harnstoff, bezogen auf 1 Mol eingesetzten Harnstoff, und durch den angegebenen Verätherungsgrad der Methylolgruppen.

Im Hinblick auf diese chemische Zusammensetzung war es höchst überraschend, daß die erfindungsgemäßen Produkte zur Vernetzung von OH-Gruppen enthaltender Polymeren bei milden Kondensationsbedingungen verwendet werden können und nach erfolgter Vernetzung Produkte erhalten werden, die eine ausgezeichnete Waschpermanenz, geringe Chlorretention und keine Vergilbung zeigen, die darüber hinaus geruchfrei sind und die während der Verarbeitung kaum Formaldehyd abspalten. Die geringe Chlorretention der unter Einsatz erfindungsgemäßer Aminoplast-Vorkondensate erhaltenen Steif-Ausrüstung ist umso überraschender, als aus der Literatur (vgl. Melliand-Textilbericht, Band 42, Seite 1292 und folgende (1961)) bekannt ist, daß sowohl Dimethylol-uron-dimethyläther als auch methylverätherte Methylolmelamine eine relativ starke Chlorretention aufweisen.

Die erfindungsgemäßen Aminoplast-Vorkondensate werden hergestellt, indem man in wäßriger Lösung Harnstoff mit, bezogen auf 1 Mol Harnstoff, 8 - 12 Mol, vorzugsweise 8 bis 10 Mol, Formaldehyd bei pH-Werten über 11 und Temperaturen von 45 bis 55$^{\circ}$C kondensiert, dann mit 0,2 bis 0,65 Mol, vorzugsweise 0,3 bis 0,6 Mol, Melamin versetzt und bei 65 - 80$^{\circ}$C, vorzugsweise 70$^{\circ}$C, 10 - 20 Minuten, vorzugsweise 15 Minuten weiterkondensiert und dann mit 17 - 23 Mol, vorzugsweise 20 Mol, Methanol bei pH-Werten von unter 3, vorzugsweise bei pH-Werten von 2 bis 1, insbesondere bei pH 1,5, bei 30 bis 40°C, vorzugsweise 35 - 37°C, veräthert, neutralisiert und anschließend eindampft. Das Eindampfen erfolgt vorzugsweise unter Normaldruck, beispielsweise bei Temperaturen von 120 bis 170°C, in der Regel auf einen Festkörpergehalt von 60 bis 100 Gewichts%.

Die Kondensation der Aminoplastbildner mit dem Formaldehyd und die anschließende Verätherung werden zweckmäßigerweise in ein und demselben Reaktionsgefäß durchgeführt; das Eindampfen der Reaktionsmischung wird zweckmäßigerweise in einem Gerät vorgenommen, das kurze Verweilzeiten ermöglicht. Bekannte Geräte dieser Art sind z.B. Dünnschicht- oder Dünnfilmverdampfer oder Sprühtrockner.

Die erfindungsgemäßen Aminoplast-Vorkondensate können entweder gemeinsam mit dem OH Gruppen enthaltenden Polymeren oder in getrennten Verfahrensschritten, jeweils unter Zusatz geeigneter, z.B. saurer oder latent saurer bekannter Härtungsbeschleuniger appliziert werden. Für die Steifausrüstung von Textilien ist eine getrennte Applikation von OH-Gruppen-haltigen Polymeren und erfindungsgemäßen Aminoplast-Vorkondensaten üblich. Hierbei werden die zu versteifenden Textilmaterialien zunächst mit dem OH-Gruppen-haltigen Polymeren, vorzugsweise einem Polyvinylalkohol, oder teilverseiften Polyvinylestern, insbesondere teilverseiftem Polyvinylacetat, imprägniert und gegebenenfalls nach einer Zwischentrocknung anschließend mit dem erfindungsgemäßen Aminoplast-Vorkondensat imprägniert und durch eine Hitzebehandlung bei 130 bis 150°C die Vernetzung des Polymeren vollzogen.

Die im vorhergehenden Absatz beschriebenen Flotten können selbstverständlich weitere übliche, zusätzliche Effekte ergebende Hilfsmittel, wie z.B. Avivagemittel, Hydrophobiermittel und/oder optische Aufheller enthalten. Ferner enthält eine Klotzflotte noch den erforderlichen sauren Katalysator. Bei Flottenaufnahmen von 50 bis 100 % enthalten die Klotzflotten 40 bis 200 g/l der 75 %igen Lösung eines erfindungs- gemäßen Kondensationsprodukts. Die folgenden Ausführungs- beispiele zeigen die Herstellung der erfindungsgemäßen Aminoplast-Vorkondensate und ihre Verwendung zur Pflegeleicht- bzw. Steifausrüstung von Textilmaterialien.

## Beispiel 1

120 kg Harnstoff, 1232 kg wässriger, 39 Gew.%iger Formaldehyd werden zusammen mit 50 kg 27 Gew.%iger Natronlauge in einem mit Thermometer, Heiz- und Kühlschlange versehenen Rührgefäß aus rostfreiem Stahl auf 50°C erwärmt und bei dieser Temperatur 5 Stunden lang bei pH 9,8 - 10 gerührt.

Die klare Lösung wird auf 71°C angeheizt und sodann 68 kg Melamin eingetragen. Es wird ohne weiteres Heizen weitergerührt, wobei die Temperatur auf 74°C ansteigt und das Melamin in Lösung geht. Hiernach wird unter Rühren im Laufe von 15 Minuten auf 64°C abgekühlt. Dann wird die Masse durch Kühlung mit Eiswasser im Laufe von 6 Minuten auf eine Temperatur von 35°C gebracht, wobei sich ein Niederschlag ausbildet. Jetzt wird mit 1280 kg Methanol verrührt, die Temperatur der Suspension auf 32°C eingestellt und mit rund 73 kg 65 Gew.%iger Salpetersäure ein pH-Wert von 1,5, gemessen an einer Glaselektrode, eingestellt, wobei die Tem- peratur auf 36°C ansteigt. Nach fünfminutigem Rühren entsteht eine klare Lösung, die noch bei 36°C 10 Minuten lang weitergerührt wird. Im Laufe dieser Zeit sinkt der pH-Wert auf 1,45. Nun wird mit rund 50 kg 50%iger Natronlauge auf einen pH-Wert von 10 eingestellt, wobei ein Termperaturanstieg auf etwa 50°C eintritt. Ein dünner Film der Lösung wurde kurzfristig über eine auf 120 - 140°C erhitzte Metallwand geleitet, wobei die Verweilzeit so eingestellt wurde, daß in der abfließenden Lösung ein Festkörpergehalt von 74% auftrat.

Polyvinylalkohoihaltige Steifausrüstungen für Zellulosegewebe, die mit dem oben hergestellten Produkt unter den in
Beispiel 10 beschriebenen Bedingungen vernetzt werden, zeigen hervorragendeWaschpermanenz, hohen Steifeffekt und günstige Werte in bezug auf Chlorretention. Der Gehalt an
freiem Formaldehyd des Produktes liegt bei Werten unter 3 %.

Beispiel 2

Das Beispiel 1 wird wiederholt mit dem einzigen Unterschied,
daß anstelle der dort eingesetzten Menge von 68 kg Melamin
118 kg Melamin eingesetzt werden.

Die 75 Gew.% Festkörper enthaltende Lösung hat einen Gehalt
an freiem Formaldehyd von weniger als 2 %.

Waschpermanenz und Steifeffekt der nach Beispiel 10 hergestellten Ausrüstung ist sehr gut, in bezug auf Chlorretention liegt das Produkt besonders günstig.

Beispiel 3

120 kg Harnstoff, 1232 kg 39 %iger wässriger Formaldehyd und
50 kg 27 %ige wässrige Natronlauge werden in einer Apparatur,
wie in Beispiel 1 beschrieben, 5 Stunden auf 50°C erwärmt
und anschließend bei 70°C 94 kg Melamin eingetragen. Im Laufe von 15 Minuten wird von 75°C auf 65°C abgekühlt, anschließend mit Eiswasser eine Temperatur von 40°C eingestellt. Nach Zugabe von 1280 kg Methanol und einer Temperatureinstellung auf 33°C wird mit ca. 73 kg 65 Gew.%iger Salpetersäure ein pH-Wert von 1,6 - 1,7 eingestellt. Hierbei
gehen ausgefallene Methylolverbindungen im Laufe von 10 Minuten in Lösung und die Temperatur steigt auf 37°C. Jetzt
wird mit etwa 55 kg 50 Gew.%iger wässriger Natronlauge auf
einen pH-Wert von ca. 10 neutralisiert und die Lösung,wie
bereits im Beispiel 1 beschrieben, auf 74 bis 75 Gew.%
Festkörpergehalt konzentriert.

Beispiel 4

Es wird in Herstellung und Aufarbeitung verfahren wie in Beispiel 1, mit dem einzigen Unterschied, daß anstelle der in Beispiel 1 eingesetzten Menge von 1280 kg Methanol 1088 kg Methanol eingesetzt werden. Bei Einsatz des Produkts gemäß einem der Beispiele 10 bis 12 werden Ausrüstungen mit hervorragender Waschpermanenz und Steife bei sehr geringer Chlorretention erhalten.

Beispiel 5

Beispiel 2 wird wiederholt mit dem einzigen Unterschied, daß anstelle von 1280 kg 1088 kg Methanol eingesetzt werden. Das erhaltene Produkt, nach einem der Beispiele 10 bis 12 einge setzt, gibt Ausrüstungen mit hervorragender Waschpermanenz und Steifeffekt und Chlorretentionswerten.

Beispiel 6

Beispiel 3 wird wiederholt mit dem einzigen Unterschied, daß anstelle von 1280 kg 1088 kg eingesetzt werden. Das erhaltene Produkt, nach einem der Beispiele 10 bis 12 eingesetzt, gibt Ausrüstungen mit hervorragender Waschpermanenz und Steifeffekt bei einer sehr geringen Chlorretention.

Beispiel 7

Beispiel 1 wird wiederholt mit dem einzigen Unterschied, daß anstelle von 1280 kg 1472 kg Methanol eingesetzt werden. Mit dem erhaltenen Produkt werden gemäß den Beispielen 10 bis 12 Ausrüstungen mit hervorragender Waschpermanenz, hohem Steif effekt und sehr guter Chlorretention erhalten.

Beispiel 8

Beispiel 2 wird wiederholt mit dem einzigen Unterschied, daß anstelle der dort eingesetzten Menge von 1280 kg Methanol 1472 kg Methanol eingesetzt werden. Die Ausrüstungen, erhalten unter Verwendung des erhaltenen Produkts, zeigen hervorragende Chlorretention und sehr gute Werte bezüglich Wasch- permanenz und Steifeffekt.

Beispiel 9

Beispiel 3 wird wiederholt mit dem einzigen Unterschied, daß
anstelle der dort eingesetzten Menge von 1280 kg Methanol
1472 kg Methanol eingesetzt werden. Die Ausrüstungen, erhalten nach den Beispielen 10 bis 12, unter Verwendung dieses
Vorkondensats, sind bezüglich Waschpermanenz, Steifeffekt
und Chlorretention hervorragend.

Beispiel 10

Baumwollegewebe, das für Hemdkrageneinlagenstoff geeignet
ist, wird in üblicher Weise gebleicht und getrocknet. Dann
wird das trockene Gewebe mit einer Lösung getränkt, die
folgende Zusammensetzung aufweist:

80 g 75 %ige wässrige Vorkondensat-Lösung, hergestellt nach
          Beispiel 3

50 g Polyvinylalkohol (®Vinarol SVH, Handelsprodukt der
     HOECHST AG, Frankfurt a.M. 80, BRD)

10 g modifizierte Stärke (®Solvitose HDF, Handelsprodukt
     der SICHEL-WERKE, Hannover, BRD)

10 g Polyäthylendispersion ca. 40 % in Wasser (®Cassappret P
     conc., Handelsprodukt der CASSELLA AKTIENGESELLSCHAFT,
     Frankfurt a.M. 61, BRD)

 2 g Stilbenaufheller (®Hostalux CN conc., Handelsprodukt
     der HOECHST AG, Frankfurt a.M. 80, BRD)

20 g Magnesiumchlorid kristallisiert

838 g Wasser

Das Gewebe wird auf 70 % Flottenaufnahme abgequetscht, bei
ca. 130°C getrocknet und vier Minuten bei 150°C kondensiert.
Das Gewebe erfährt hierdurch eine Hochveredlung bezüglich
Knitterarm- und Krumpfausrüstung, beständig gegen natriumhypochlorithaltigen Wäschen. Die Fixierung der Steifmittel
wie Polyvinylalkohol und Stärke weist eine hervorragende
Waschpermanenz auf.

Beispiel 11

Ein gefärbtes und getrocknetes Gewebe aus Polyester-Zellwolle 65/35 wird mit einer Flotte folgender Zusammensetzung getränkt:

60 g 75 %ige wässrige Vorkondensat-Lösung, hergestellt nach Beispiel 2

20 g Polydimethylsiloxan (37 %ige wässrige Emulsion)

10 g Polyäthylendispersion, 40 %ig, wässrig (®Cassapret P conc., Handelsprodukt der CASSELLA AKTIENGESELLSCHAFT, Frankfurt a.M. 61, BRD)

12 g Zinkchlorid wasserfrei

1 g Essigsäure 60 %ig

897 g Wasser

Es wird auf 60 % Flottenaufnahme abgequetscht, bei 130°C getrocknet und drei Minuten bei 150°C kondensiert. Es resultiert eine vorzügliche Pflegeleichtausrüstung; die Gewebe eignen sich hervorragend für Kleider- und Anzugstoffe.

Beispiel 12

Für die Pflegeleichtausrüstung von Baumwoll-Schürzenstoff wird folgende Flotte angesetzt:

70 g 75 %ige wässrige Lösung des nach Beispiel 6 hergestellten Vorkondensats,

10 g Polyvinylacetatdispersion 55 %ig in Wasser (®Appretan MB extra, Handelsprodukt der HOECHST AG, Frankfurt a.M. 80, BRD)

20 g Polyäthylendispersion 40 %ig in Wasser (®Cassapret P conc., Handelsprodukt der CASSELLA AKTIENGESELLSCHAFT, Frankfurt a.M. 61, BRD)

20 g Fettsäurekondensationsprodukt (®Leomin NJ, Handelsprodukt der HOECHST AG, Frankfurt a.M. 80, BRD)

14 g Magnesiumchlorid kristallin

866 g Wasser

Die Ausrüstung der Gewebe erfolgt unter den Bedingungen, wie sie in Beispiel 11 beschrieben worden sind und zeigt hervorragende Waschpermanenz, Knitterfreiheit bei sehr günstigen Werten der Chlorretention.

Beispiel 13 (Vergleichsbeispiel)
Es wurde ein Aminoplastvorkondensat wie im Herstellungsbeispiel 1 synthetisiert mit dem Unterschied, daß kein Melamin eingesetzt wurde.

Das klare, verätherte, in Wasser zu 75 Gew.% gelöste Produkt wurde nach Beispiel 10 als Vernetzer für eine Steifausrüstung auf Baumwollgewebe verwendet. Es wurde gegenüber dem in Beispiel 3 hergestellten Aminoplastvorkondensat ein stark verschlechtertes Verhalten bezüglich der Chlorretention beobachtet.

Beispiel 14 (Vergleichsbeispiel)
Beispiel 3 wurde wiederholt, jedoch wurden anstelle von 1280 kg Methanol und 73 kg Salpetersäure lediglich 640 kg Methanol und 40 kg Salpetersäure in der Verätherungsstufe eingesetzt. Analog Anwendungsbeispiel 10 eingesetzt, wurde bei der ausgerüsteten Ware eine deutlich stärke Chlorretention beobachtet.

0000884

Ref. 3099

Patentansprüche

1. Aminoplast-Vorkondensat,
bestehend aus einer wäßrigen Lösung von mit Methanol teilverätherten Harnstoff-Formaldehyd- und Melamin-Formaldehyd-
Kondensationsprodukten, dadurch gekennzeichnet, daß
das Molverhältnis von Harnstoff zu Melaminkondensationsprodukten, bezogen auf Harnstoff bzw. Melamin, 1:0,2 bis
0,65 und der Verätherungsgrad der Methylolgruppen 40 bis
75% beträgt und das teilverätherte Harnstoff-Formaldehyd-
Kondensationsprodukt überwiegend als teilveräthertes Dimethyloluron und das teilverätherte Melamin-Formaldehyd-Kondensationsprodukt überwiegend als teilveräthertes Hexamethylolmelamin vorliegt.

2. Verfahren zur Herstellung des Aminoplast-Vorkondensats des
Anspruchs 1, dadurch gekennzeichnet, daß man in wäßriger
Lösung Harnstoff mit, bezogen auf 1 Mol Harnstoff, 8 - 12 Mol
Formaldehyd bei pH-Werten über 11 und Temperaturen von 45 bis
55°C kondensiert, dann mit 0,2 bis 0,65 Mol Melamin versetzt
und bei 65 - 80°C 10 bis 20 Minuten weiterkondensiert und
dann mit 17 bis 23 Mol Methanol bei pH-Werten unter 3 bei
30 - 40°C veräthert, neutralisiert und anschließend eindampft.

3. Verfahren nach Anspruch 2, dadurch gekennzeichnet, daß man
mit 8 bis 10 Mol Formaldehyd kondensiert.

4. Verfahren nach den Ansprüchen 2 oder 3, dadurch gekennzeichnet, daß man mit 0,3 bis 0,6 Mol Melamin versetzt.

5. Verfahren nach den Ansprüchen 2 bis 4, dadurch gekennzeichnet, daß man bei pH-Werten von 2 bis 1 veräthert.

6. Verfahren nach den Ansprüchen 2 bis 5, dadurch gekennzeichnet, daß man die neutralisierte Lösung unter Normaldruck
eindampft.

0000884

Ref. 3099

7. Verfahren nach den Ansprüchen 2 bis 6, dadurch gekennzeichnet, daß man bei der Eindampfung der neutralisierten Lösung kurze Verweilzeiten einhält.

8. Verfahren nach den Ansprüchen 2 bis 7, dadurch gekennzeichnet, daß man die neutralisierte Lösung auf einen Festkörpergehalt von 60 bis 100 Gew.% eindampft.

9. Verwendung der Aminoplast-Vorkondensate des Anspruchs 1 zur Vernetzung OH-Gruppen enthaltender Polymerer.

10. Verwendung der Aminoplast-Vorkondensate des Anspruchs 1 zur Vernetzung von Polyvinylalkohol und/oder teilverseiften Polyvinylestern.

Europäisches
Patentamt

**EUROPÄISCHER RECHERCHENBERICHT**

Nummer der Anmeldung

000084

EP 78 10 0595

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 089 859 (T. OSHIMA et al.) <br><br> * Patentansprüche; Spalte 2, Zeilen 37-61; Spalte 4, Zeile 12 * <br><br> -- | 1-8 |
| A | CH - B - 3858/70 (SANDOZ) <br><br> * Patentansprüche * <br><br> ------ | 1,9,10 |

**KLASSIFIKATION DER ANMELDUNG (Int.Cl.²)**

C 08 G 12/42
            12/38
C 08 L 29/06

**RECHERCHIERTE SACHGEBIETE (Int. Cl.²)**

C 08 G 12/42
          12/34
          12/36
          12/38
          12/26
C 08 L 29/04
          29/06

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-11-1978 | DERAEDT |

EPA form 1503.1   06.78